# EUROPÄISCHE PATENTSCHRIFT

(11) **EP 2 201 837 B1**
(45) Veröffentlichungstag und Bekanntmachung des Hinweises auf die Patenterteilung: **15.01.2014**
(21) Anmeldenummer: 09174896.2
(22) Anmeldetag: 03.11.2009
(51) Int. Cl.: A01N 33/02, A01N 33/12, A01P 1/00, C02F 1/76

(54) **Verwendung von Polymeren quaternärer Ammoniumverbindungen**
Use of polymers of quaternary ammonium compounds
Utilisation de polymères de liaisons d'ammonium quaternaires

(30) Priorität: 07.11.2008 AT 17352008
(43) Veröffentlichungstag der Anmeldung: 30.06.2010
(73) Patentinhaber: Arcana Pool Systems GmbH, 2201 Gerasdorf bei Wien (AT)
(72) Erfinder: Müller, Werner, 3003 Gablitz (AT)
(74) Vertreter: Pawloy, Peter Michael

(56) Entgegenhaltungen:
- EP-A2- 0 456 467
- WO-A1-00/09453
- WO-A1-97/34834
- US-A- 4 923 619
- US-A- 5 096 601
- US-A1- 2004 062 744
- BOLTO ET AL: "Soluble polymers in water purification", PROGRESS IN POLYMER SCIENCE, PERGAMON PRESS, OXFORD, GB, Bd. 20, Nr. 6, 1. Januar 1995 (1995-01-01) , Seiten 987-1041, XP022703699, ISSN: 0079-6700, DOI: 10.1016/0079-6700(95)00010-D [gefunden am 1995-01-01]

## Beschreibung

Die vorliegende Erfindung betrifft die Verwendung von Polymeren quaternärer Ammoniumverbindungen bzw. deren Salze zur Desinfektion und Algenverhütung von Badewasser. Weiters betrifft die vorliegende Erfindung auch ein Desinfektionsmittel zur Desinfektion und Algenverhütung von Badewasser.

Wenn in der vorliegenden Anmeldung von Badewasser die Rede ist, so ist hierunter das Wasser von Planschbecken, Whirlpools, Schwimmbecken, Therapiebecken, Tauchbecken (etwa bei Saunabesuch), Großbadewannen, Thermen und dgl. zu verstehen. Anders ausgedrückt wird unter Badewasser all jenes Wasser verstanden, welches aus hygienischen Gründen wegen mehrmaliger Benutzung, verstärkter Belastung, erhöhter Temperatur oder einer Kombination dieser Bedingungen zumindest einer Desinfektion bzw. einer Desinfektion und Algenverhütung unterzogen werden muss. Unter Badewasser wird sowohl Wasser in Kaltwasserbecken (mit einer Temperatur von 7 bis 25°C) als auch Wasser in Warmwasserbecken (mit einer Temperatur von 25 bis 40°C) verstanden.

Zur Zeit ist für die Behandlung von Badewasser die Behandlung mit Chlorverbindungen oder alternativ mit Sauerstoffverbindungen üblich. Nachteilig bei diesen Behandlungen ist jedenfalls die starke Geruchsbelästigung bzw. auch Haut- und Augenirritationen bei Verwendung von Chlorverbindungen, die relativ kurze Wirksamkeit sowie auch noch der erhöhte Preis von Peroxydverbindungen bei Verwendung von Sauerstoff als Oxidationsmittel. Abgesehen von diesem üblichen Verfahren besteht auch noch die Möglichkeit einer Badewasserdesinfektion bzw. Algenverhütung durch Verwendung von Guanidin, ebenfalls zusammen mit Peroxydverbindungen.

All diesen Verfahren ist gemeinsam, dass sie nur in einem relativ engen pH-Bereich von 7,2 bis 7,4 effizient wirken. Wenn dieser pH-Bereich beispielsweise durch vermehrte Benützung, verstärkte Sonneneinstrahlung oder erhöhte Temperatur verlassen wird, muss das Badewasser zuerst wieder auf den angegebenen Idealbereich mittels pH-Senker oder pH-Heber eingestellt werden, bevor ein Desinfektionsmittel nachdosiert werden kann.

Speziell bei der Verwendung von Chlorverbindungen ist auch nachteilig, dass es bei Zugabe ins Badewasser, speziell bei auch nur leichtem Wind, zu einer Verwehung der zumeist granulatförmigen Chlorverbindungen kommt, wodurch beispielsweise Edelstahlumrandungen aber auch angrenzende Pflanzen, Wiesen oder auch Holzdecks auf Dauer in Mitleidenschaft gezogen werden können.

Im Stand der Technik ist die Verwendung von quaternären Ammoniumverbindungen als Desinfektionsmittel bekannt.

Quartäre Ammoniumverbindungen, gelegentlich auch QAV oder Quats genannt, sind organische Ammoniumverbindungen, bei denen alle vier Valenzen des Stickstoff-Atoms organisch gebunden sind. Es handelt sich somit um ionische Verbindungen. Es gibt den Amin-Typ NR₄⁺X⁻, bei dem alle vier R organische Reste sind, und den Imin-Typ R=NR₂⁺X⁻; X ist das zugehörige Anion. Auch N-alkylierte Heteroaromaten gehören zu den quartären Ammoniumverbindungen.

Polyquat ist der gebräuchliche Name für eine Klasse von Schwimmbad- und Whirlpoolalgiziden, welche chemisch zumeist aus n-Alkyldimethylbenzylammoniumchlorid bestehen, wobei auch einige Dialkylmonomethylisomeren eingeschlossen sind. Der allgemeine Name leitet sich von der Tatsache ab, dass diese Verbindungen POLY-alkyl QUATernäre Amine sind.

So wird z.B. Polyquat DMA/E 50, nämlich Poly[(dimethyliminio)-2-hydroxy-1,3-propandiylchlorid], für die Behandlung von Schwimmbadwasser vorgeschlagen, insbesondere aufgrund seiner langanhaltenden bioziden Wirkung. Polyquat DMA/E 50 ist nicht flüchtig und nicht schäumend, greift keine Metallteile an und fördert auch das Absetzen von Verunreinigungen. Weiters weist das Polyquat eine sehr niedrige Toxizität auf, verursacht keine Irritation von Augen oder Haut und hat auch keinen unangenehmen Geruch sowie eine anhaltende Wirksamkeit und eine Unempfindlichkeit gegenüber dem pH-Wert. Das Polyquat ist, wie bereits ausgeführt, auch biozid wirksam, somit per Definition sowohl als Bakterizid als auch als Algizid einsetzbar.

Hinsichtlich der Wirkungsweise der Polyquats wird angenommen, dass diese durch Zerfall der Polymerkette langsam quaternäre Ammoniumverbindungen freisetzen, wobei höhere Temperatur, stärkere Sonneneinstrahlung sowie verstärkter Schmutz- und Fremdstoffeintrag ins Badewasser auch ein schnelleres Zersetzen des Polyquats zufolge hat. Die oben genannten Faktoren hinsichtlich Temperatur, Sonneneinstrahlung und Schmutzeintrag stehen auch in ursächlichem Zusammenhang mit einer erhöhten Belastung des Badewassers, sodass hier günstigerweise bei verstärkter Belastung des Badewassers auch eine beschleunigte Zersetzung des Polyquats und somit eine erhöhte biozide Wirksamkeit vorgesehen wird. Polyquats sind bereits als Zusatzstoffe zur Chlor und/oder Sauerstoffbehandlung von Badewasser bekannt, hier soll die langsame Zersetzung der Polyquats eine Langzeitwirkung vorsehen, während durch Chlor und/oder Sauerstoffverbindungen eine anfängliche Grundreinigung des Badewassers vorgesehen wird.

Aufgabe der vorliegenden Erfindung war es nun, die Verwendung von Chlor und/oder Sauerstoffverbindungen bei der Desinfektion von Badewasser zu vermeiden sowie ein auch schwermetallfreies Desinfektionssystem vorzusehen. Gleichzeitig sollte die bekannte Langzeitwirkung von Polyquats eingesetzt werden, und diese mit einem geeigneten schnell wirksamen Biozid kombiniert werden.

Diese Aufgabe wird erfindungsgemäß dadurch gelöst, dass zumindest zwei Polymere von quaternären Ammoniumverbindungen bzw. deren Salze eingesetzt werden, wobei mindestens ein Polymer einen Polymerisationsgrad von 30 bis 55 und mindestens ein weiteres Polymer einen Polymerisationsgrad von 120 bis 160 aufweist. Überraschenderweise wurde gefunden, dass Polymere quaternäre Ammoniumverbindungen mit kürzeren Kettenlängen, d.h. niedrigeren molekularen Massen bzw. niedrigerem Polymerisationsgrad, schneller zerfallen als die höhermolekularen Verbindungen bzw. die Verbindung mit höherem Polymerisationsgrad. Dies ist insofern überraschend, als man annehmen sollte, dass längerkettige Polymere aufgrund höherer Instabilität des Moleküls schneller zerfallen als kürzerkettige Polymere, vgl. hiezu etwa Charles C. Han in Annual Review of Physical Chemistry, Vol. 43:61-90 10/1992. Wenn im Folgenden von Polymerisationsgrad die Rede ist, wird hierunter das Verhältnis zwischen der mularen Masse eines Polymers und der eines einzelnen Monomers davon verstanden.

Beim Gegenstand der vorliegenden Erfindung wird somit ein Polymer von quaternären Ammoniumverbindungen bzw. dessen Salze mit einem Polymerisationsgrad von 30 bis 55 als kurzzeitwirkendes Biozid verwendet, während das Polymer von quaternären Ammoniumverbindungen bzw. dessen Salzen mit einem Polymerisationsgrad von 120 bis 160 als Polymer mit Depotwirkung vorgesehen ist, jeweils vorzugsweise in Abwesenheit von Oxidationsmitteln. Im Zuge von Versuchen im Zusammenhang mit der vorliegenden Erfindung wurde gefunden, dass bei Verwendung von Polymeren von quaternären Ammoniumverbindungen mit einem Polymerisationsgrad von 120 bis 160 die volle Wirksamkeit als Biozid erst ab dem siebten Anwendungstag einsetzte, wobei zu diesem Zeitpunkt jedoch die Population von Keimen und Algen im Badewasser bereits zu hoch war, um mit Bioziden in vernünftiger Dosierung bekämpft werden zu können. Bei direktem Einsatz von quaternären Ammoniumverbindungen, z.B. Benzalkoniumchloriden, kam es zu einer unerwünschten Schaumbildung, welche speziell bei Whirlpools als unerwünscht abgelehnt werden muss. Erst der Zusatz von quaternären Ammoniumverbindungen mit einem Polymerisationsgrad von 30 bis 55 ermöglicht eine von Anbeginn der Zudosierung an vorhandene biozide Wirkung zusammen mit verringerter Schaumbildung. Die erfindungsgemäß verwendeten Polymere von quaternären Ammoniumverbindungen bzw. deren Salze mit einem Polymerisationsgrad von 30 bis 55 sind dabei schon unmittelbar ab Zudosierung zu 20% verfügbar und zwischen den Tagen 1 und 10 nach Zudosierung wirksam, wobei sie eine Abbaugeschwindigkeit von lediglich etwa 5mg pro Woche aufweisen.

Gemäß einer bevorzugten Ausführungsform der vorliegenden Erfindung ist vorgesehen, dass zumindest zwei Polymere einer quaternären Ammoniumverbindung bzw. deren Salze eingesetzt werden, wobei mindestens ein Polymer einen Polymerisationsgrad von 30 bis 55 und mindestens ein weiteres Polymer einen Polymerisationsgrad von 120 bis 160 aufweist. Hier ist besonders günstig, dass die biozide Wirksamkeit einer bestimmten polymeren Ammoniumverbindung sowohl im Bereich der Kurzzeitwirkung als auch langfristig vorgesehen wird, da sowohl die Polymere mit einem Polymerisationsgrad von 30 bis 55 als auch jene mit einem Polymerisationsgrad von 120 bis 160 bei Zersetzen dasselbe Monomer freisetzen.

Weiters ist günstig, wenn die Polymere die allgemeine Formel 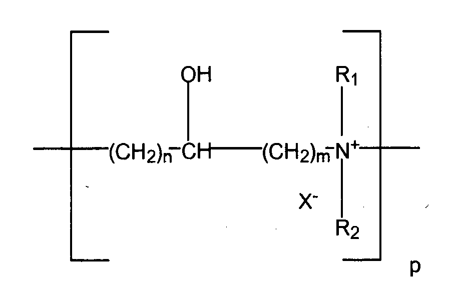 aufweisen, wobei R₁ und R₂ gleich oder verschieden sind und jeweils ausgewählt werden aus C₁-C₄-Alkylen, n und m gleich oder verschieden sind und jeweils eine ganze Zahl von 1 bis 3 bedeuten, X- ein geeignetes Gegenion, vorzugsweise ein Halogenion, besonders bevorzugt Chlorid bedeutet, und p für mindestens ein Polymer 30 ≤ p ≤ 55 und für mindestens ein weiteres Polymer 120 ≤ p ≤ 160 beträgt. Verbindungen der angegebenen Formel weisen aufgrund der OH-Gruppe eine ausreichende Hydrophylie auf, um einerseits wasserlöslich zu sein, andererseits sind sie aufgrund der Kettenlänge des Monomers relativ leicht zersetzbar und können so das Biozid-wirkende Monomer sowohl im Kurzzeit- als auch im Langzeitbetrieb sicher freisetzen.

Weiters ist günstig, wenn R₁ und R₂ gleich sind und jeweils eine Methylgruppe bedeuten, n und m gleich sind und jeweils 1 bedeuten, X- Chlorid bedeutet, und p für mindestens ein Polymer 30 ≤ p ≤ 55 und für mindestens ein weiteres Polymer 120 ≤ p ≤ 160 beträgt. Als bevorzugter Vertreter dieser Verbindung wird Poly[(dimethyliminio)-2-hydroxy-1,3-propandiylchlorid] genannt, welches z.B. mit einem Polymerisationsgrad von 25, 35, 50, 130, 150 und 170 im Handel erhältlich ist.

Bevorzugt wird dabei, wenn p für mindestens ein Polymer 35 ≤ p ≤ 50 und für mindestens ein weiteres Polymer 130 ≤ p ≤ 150 beträgt, wobei besonders günstig ist, wenn mindestens ein Polymer ein polymeres N,N-Dimethyl-2-hydroxypropylammoniumchlorid mit einem Polymerisationsgrad von 50 und mindestens ein weiteres Polymer ein polymeres N,N-Dimethyl-2-hydroxypropylammoniumchlorid mit einem Polymerisationsgrad von 130 ist. Die Verwendung von Polyquart DMA/E 50, einem Polymer von quaternären Ammoniumverbindungen mit (Dimethyliminio)-2-hydroxy-1,3-propandiylchlorid-Monomeren und einem Polymerisationsgrad von 130 zusammen mit einem Polymer von quaternären Ammoniumverbindungen mit (Dimethyliminio)-2-hydroxy-1,3-propandiylchlorid-Monomeren und einem Polymerisationsgrad von 50 wird hierbei besonders bevorzugt, bei Verwendung dieser beiden Polyquats kommt es zu einer ausgewogenen Freisetzung der wirksamen quaternären Ammoniumverbindung ins Badewasser sowohl unmittelbar nach der Zudosierung als auch über einen verlängerten Zeitraum. Überraschenderweise haben die Versuche, die im Zusammenhang mit der vorliegenden Erfindung durchgeführt wurden, ergeben, dass bei durchschnittlicher Belastung die erfindungsgemäße Verwendung ein Nachdosieren während einer gesamten Schwimmbadsaison praktisch überflüssig machte, erfindungsgemäß steht somit ein Mittel zur Verfügung, welches eine einmalige Zudosierung während einer gesamten Saison ausreichend erscheinen lässt.

Vorzugsweise ist vorgesehen, dass die Verwendung in Abwesenheit von Oxidationsmitteln und/oder in Abwesenheit von Schwermetallen erfolgt. Hierdurch wird nicht nur die unmittelbare Umgebung des Schwimmbades von dem unangenehmen Abrieb bei Verwendung von Chlorgranulat geschützt, die erfindungsgemäße Zusammensetzung weist auch eine praktisch nicht vorhandene Irritation von Augen oder Haut auf und hat auch keinen unangenehmen Geruch.

Gemäß einer weiteren bevorzugten Ausführungsform der vorliegenden Erfindung wird ein Mittel zur Desinfektion und Algenverhütung in Badewasser zur Verfügung gestellt, wobei es zumindest zwei Polymere von quaternären Ammoniumverbindungen bzw. deren Salze umfasst, wobei mindestens ein Polymer einen Polymerisationsgrad von 30 bis 55 und mindestens ein weiteres Polymer einen Polymerisationsgrad von 120 bis 160 aufweist. Ein derartiges Mittel kann für die verschiedensten Einsatzmöglichkeiten dosiert werden, wobei anzustreben ist, dass die Zugabe bzw. Berechnung der Dosierung für den Anwender möglichst einfach und übersichtlich gehalten wird. Das erfindungsgemäße Mittel wird in Abhängigkeit von der angestrebten Einsatzmöglichkeit verschiedene Konzentrationen aufweisen, so ist beispielsweise bei einem Whirlpool aufgrund der erhöhten Temperatur und der intensiven Begasung mittels der durch den Whirlpool geperlten Luft im Allgemeinen eine höhere Dosierung nötig als beispielsweise bei einem unbeheizten Freiwasserpool. Auch wird ein Kinderplanschbecken eine andere Dosierung erfordern als ein beheizter Indoor-Pool, wobei darauf zu achten ist, dass in allen Fällen eine zuverlässige Reinigung und Desinfektion des Badewassers über einen verlängerten Zeitraum gegeben ist.

Günstigerweise wird für die Anwendung in einem Kaltwasserbecken eine Konzentration an Polymeren von quaternären Ammoniumverbindungen vorgesehen werden, welche sowohl die höhere Konzentration an Polymer von quaternären Ammoniumverbindungen mit einem Polymerisationsgrad von 120 bis 160 (der "Langzeitkomponente") als auch die verhältnismäßig geringere Konzentration an Polymeren von quaternären Ammoniumverbindungn mit einem Polymerisationsgrad von 30 bis 55 (der "Kurzzeitkomponente") berücksichtigt. In diesem Zusammenhang ist es insbesondere auch mit den falkutativ enthaltenen weiteren Pflegemitteln, wie Sequestriermittel, AntiSchaummittel, Hautpflegemittel, Trübungsentferner und dgl., von Vorteil, wenn die beiden Polymere von quaternären Ammoniumverbindungen mit einem Polymerisationsgrad von 30 bis 55 bzw. einem Polymeristationsgrad von 120 bis 160 in zwei getrennten Pflegephasen zugesetzt werden, wobei ein Volumen an Zusatz pro Pflegephase von je 11 berechnet auf 10 m³ Beckeninhalt angestrebt wird. In gleicher Weise kann für Planschbecken eine Zusammensetzung vorgesehen werden, welche beide Polymere enthält, aufgrund der in einem Planschbecken enthaltenen geringeren Wassermenge kann hier die Zudosierung z.B. bei ganz kleinen privaten Kinderplanschbecken auch durch Aufsprühen des erfindungsgemäßen Mittels auf die Wasseroberfläche oder Zugabe des Mittels per Messkappe pro etwa 501 Beckeninhalt durchgeführt werden. Aufgrund der erhöhten Belastung wird auch bei dem Einsatz des erfindungsgemäßen Mittels bei Whirlpools eine Zweiteilung günstig sein, wobei die beiden Polymere von quaternären Ammoniumverbindungen an sich auch in ein und derselben Pflegephase zusammen vorliegen können. Da aber normalerweise abgesehen von der Desinfektion für eine umfassende Wasserpflege, wie bereits erwähnt, auch noch andere Zusatzstoffe vorgesehen werden, können diese beispielsweise auch in einer zweiten Pflegephase zusammengefasst werden, wobei hinsichtlich der Dosierung auf ein volumsgleiches Zudosieren von Pflegephase 1 und Pflegephase 2, etwa pro m³ Beckeninhalt des Whirlpools, abzuzielen ist.

Günstigerweise ist vorgesehen, dass das erfindungsgemäße Mittel zumindest zwei Polymere einer quaternären Ammoniumverbindung bzw. deren Salze umfasst, wobei mindestens ein Polymer einen Polymerisationsgrad von 30 bis 55 und mindestens ein weiteres Polymer einen Polymerisationsgrad von 120 bis 160 aufweist, wobei besonders bevorzugt wird, dass die Polymere die allgemeine Formel 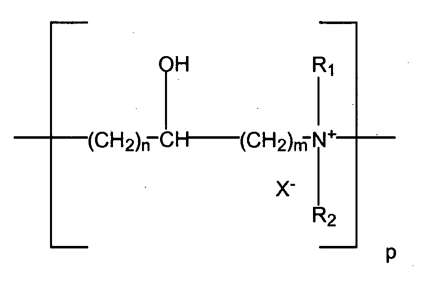 aufweisen, wobei R₁ und R₂ gleich oder verschieden sind und jeweils ausgewählt werden aus C₁-C₄-Alkylen, n und m gleich oder verschieden sind und jeweils eine ganze Zahl von 1 bis 3 bedeuten, X⁻ ein geeignetes Gegenion, vorzugsweise ein Halogenion, besonders bevorzugt Chlorid bedeutet, und p für mindestens ein Polymer 30 ≤ p ≤ 55 und für mindestens ein weiteres Polymer 120 ≤ p ≤ 160 beträgt. Wie bereits ausgeführt ist günstig, wenn R₁ und R₂ gleich sind und jeweils eine Methylgruppe bedeuten, n und m gleich sind und jeweils 1 bedeuten, X⁻ Chlorid bedeutet, und p für mindestens ein Polymer 30 ≤ p ≤ 55 und für mindestens ein weiteres Polymer 120 ≤ p ≤ 160 beträgt, besonders bevorzugt, dass p für mindestens ein Polymer 35 ≤ p ≤ 50 und für mindestens ein weiteres Polymer 130 ≤ p ≤ 150 beträgt. Günstig ist auch, wenn das erfindungsgemäße Mittel mindestens ein Polymer von N,N-Dimethyl-2-hydroxypropylammoniumchlorid mit einem Polymerisationsgrad von 50 und mindestens ein weiteres Polymer von N,N-Dimethyl-2-hydroxypropylammoniumchlorid mit einem Polymerisationsgrad von 130 umfasst, es frei von Oxidationsmitteln und/oder frei von Schwermetallen ist und es weiters an sich bekannte Zusatzstoffe für Mittel zur Wasserdesinfektion und Algenverhütung von Badewasser umfasst, ausgewählt aus der Gruppe umfassend Flockungsmittel, Chelatbildner, Entschäumer, Farbstoffe, Duftstoffe, Hautpflegemittel und Kombinationen hievon.

Die Erfindung wird nun unter Bezugnahme auf die folgenden Beispiele und Vergleichsversuche näher erläutert, ohne jedoch hierauf beschränkt zu sein.

Während für die erfindungsgemäße Verwendung sich allgemein Polymere von quaternären Ammoniumverbindungen als wirksam erwiesen, wurde aufgrund der Verfügbarkeit als zugelassenes Desinfektionsmittel und der guten Ergebnisse in den Vorversuchen die quaternäre Ammoniumverbindung N,N-Dimethyl-2-hydroxypropylammoniumchlorid als Monomer für die erfindungsgemäß eingesetzten Polymere ausgewählt. Verschiedene Polymere mit unterschiedlichen molekularen Massen wurden auf ihre Wirksamkeit überprüft. Wie sich aus Vorversuchen erwies, beeinflusst die durchschnittliche molekulare Masse maßgebend die Geschwindigkeit bei der Freisetzung der Biozid-wirksamen Monomerkomponente.

Für eine nähere Beurteilung standen insgesamt sechs Polymere von N,N-Dimethyl-2-hydroxypropylammoniumchlorid zur Verfügung, nämlich mit einem Polymerisationsgrad von 130 ("Polyquat 130"), 150 ("Polyquat 150"), 170 ("Polyquat 170"), sowie als Vertreter von Polymeren niedrigerer molekularer Massen mit einem Polymerisationsgrad von 50 ("Polyquat 50"), 35 ("Polyquat 35") und 25 ("Polyquat 25"). Diese Produkte wurden nun paarweise, nämlich immer ein Polymer mit niedrigerem Polymerisationsgrad zusammen mit Polymeren mit höherem Polymerisationsgrad, hinsichtlich ihrer Wirksamkeit und Freisetzungsgeschwindigkeit bei der Reaktion mit Standardstämmen aus der Bäderwasserhygiene getestet. Die Wirksamkeit musste gegenüber einer 100 KBE (Koloniebildende Einheiten) Normlösung aus den Bakterien rasch gegeben sein, sowie nach einem Simulationstest im SOL2-Verfahren noch immer gegeben sein. Wurden beide Wirksamkeiten bestätigt (wobei als Beurteilung das Bäderhygienegesetz diente) wurde bei einem Ergebnis von unter 10 KBE ein PLUS vergeben, NULL bedeutet ein Ergebnis zwischen 10 und 100 KBE, MINUS über 100 KBE. Als Einsatzkonzentration wurde für die schnell wirksame Komponente 20 ppm und für die langzeitwirksame Komponente 80 ppm eingesetzt.

| | Polyquat 50 | Polyquat 35 | Polyquat 25 |
|---|---|---|---|
| Polyquat 130 | ++ | 0+ | -+ |
| Polyquat 150 | ++ | 0+ | 00 |
| Polyquat 170 | 00 | 00 | 00 |

Es ist dabei ersichtlich, dass die Paarung Polyquat 130 mit Polyquat 50 bzw. Polyquat 35 ein annehmbares Ergebnis zeigt, wie auch die Paarung Polyquat 150 mit Polyquat 50 und Polyquat 35. Bei Übergang auf Polymeren mit einem Polymerisationsgrad von 170 bzw. einem Polymerisationsgrad von 25 waren keine annehmbaren Ergebnisse mehr erkennbar. Als representatives Beispiel wurde in weiterer Folge die Paarung Polyquat 130 mit Polyquat 50 ausgewählt.

Die einzelnen Rezepturen für eine erfindungsgemäße Verwendung bzw. ein erfindungsgemäßes Mittel bei Verwendung im Planschbecken (Minipools), Schwimm- oder Therapiebecken oder Whirlpools wird im Folgenden geoffenbart (alle Angaben in %-Vol):

### MINIPOOL

| | |
|---|---|
| 78% | Poly[(dimethyliminio)-2-hydroxy-1,3-propandiylchlorid] CAS Nr.: 25988-97-0 (Polyquat 130) |
| 19% | Poly[(dimethyliminio)-2-hydroxy-1,3-propandiylchlorid] CAS Nr.: 25988-97-0 (Polyquat 50) |
| 2,99% | Benzylalkohol CAS Nr.: 100-51-6 |
| 0,01% | C.I. Acid Blue 9 CAS Nr.: 3844-45-9 |

| | |
|---|---|
| Verwendung: | Wasserdesinfektion und Algenverhütung in kleinen privaten Kinderplanschbecken |
| | |
| Dosierung: | 3x sprühen (= 2ml) je 101 Beckeninhalt oder 1 Messkappe (= 10ml) je 501 Beckeninhalt |
| | |
| Nachdosierung: | Nur entsprechend der Frischwassernachspeisung erforderlich. |

Die Dosierung ist bei normaler Badefrequenz ausreichend für eine Badesaison. Bei extremer Wasserbelastung (z.B.: langanhaltendes schwüles Wetter, hoher Fremdstoffeintrag) könnte eine Nachdosierung von ca. ¼ der Erstdosierung notwendig werden.

### KALTWASSERBECKEN

### Pflegephase 1

| | |
|---|---|
| 97,99% | Poly[(dimethyliminio)-2-hydroxy-1,3-propandiylchlorid] CAS Nr.: 25988-97-0 (Polyquat 130) |
| 2% | Diallyldimethylammoniumclorid polymer (Trübungsentferner) CAS Nr.: 26062-79-3 |
| 0,01% | C.I. Acid Blue 9 CAS Nr.: 3844-45-9 |

| | |
|---|---|
| Dosierung: | 11 je 10m³ Beckeninhalt, gemeinsam mit Pflegephase 2 |
| | |
| Nachdosierung: | Nur entsprechend der Frischwassernachspeisung erforderlich. |

### Pflegephase 2

| | |
|---|---|
| 35,94% | Wasser |
| 40% | Poly[(dimethyliminio)-2-hydroxy-1,3-propandiylchlorid] CAS Nr.: 25988-97-0 (Polyquat 50) |
| 24% | Diethylentriaminpenta(methylenphosphonsäure) (Sequestriermittel), CAS Nr.: 22042-96-2 |
| 0,05% | alpha-Octadecyl-omega-hydroxy-polyglykolether (Antischaummittel), CAS Nr.: 9005-00-9 und alpha-iso-Tridecyl-omega-hydroxy-polyglykolether (Antischaummittel), CAS Nr.: 9043-30-5 |
| 0,01% | Cocoamidopropyl Betain CAS Nr.: 61789-40-0 |

| | |
|---|---|
| Dosierung: | 1l je 10m³ Beckeninhalt, gemeinsam mit Pflegephase 1 |
| | |
| Verwendung von Pflegephase | 1 + 2: Desinfektion, Algenverhütung und Sequestrierung in privaten und kommerziellen Frei- und Hallenbädern, Thermen etc. |
| | |
| Nachdosierung: | Nur entsprechend der Frischwassernachspeisung erforderlich. |

Die Dosierung ist bei normaler Badefrequenz ausreichend für etwa 5 Monate. Bei extremer Wasserbelastung (z.B.: langanhaltendes schwüles Wetter, hoher Fremdstoffeintrag) könnte eine Nachdosierung notwendig werden.

### WARMWASSERBECKEN

### Pflegephase 1

| | |
|---|---|
| 78% | Poly[(dimethyliminio)-2-hydroxy-1,3-propandiylchlorid] CAS Nr.: 25988-97-0 (Polyquat 130) |
| 19% | Poly[(dimethyliminio)-2-hydroxy-1,3-propandiylchlorid] CAS Nr.: 25988-97-0 (Polyquat 50) |
| 2,99% | Benzylalkohol CAS Nr.: 100-51-6 |
| 0,01% | C.I. Acid Blue 9 CAS Nr.: 3844-45-9 |

| | |
|---|---|
| Dosierung: | 200ml je 1m³ Beckeninhalt, gemeinsam mit Pflegephase 2 |
| | |
| Nachdosierung: | Nur entsprechend der Frischwassernachspeisung erforderlich. |

### Pflegephase 2

| | |
|---|---|
| 73,97% | Wasser |
| 24% | Diethylentriaminpenta(methylenphosphonsäure) CAS Nr.: 22042-96-2 |
| 2% | Diallyldimethylammoniumclorid polymer CAS Nr.: 26062-79-3 |
| 0,05% | alpha-Octadecyl-omega-hydroxy-polyglykolether CAS Nr.: 9005-00-9 und alpha-iso-Tridecyl-omega-hydroxy-polyglykolether CAS Nr.: 9043-30-5 |
| 0,01% | Cocoamidopropyl Betain CAS Nr.: 61789-40-0 |

| | |
|---|---|
| Dosierung: | 200ml je 1m³ Beckeninhalt, gemeinsam mit Pflegephase 1 |
| | |
| Nachdosierung: | Nur entsprechend der Frischwassernachspeisung erforderlich. |

Die Dosierung ist bei normaler Badefrequenz z.B. in einem Whirlpool ausreichend für etwa 5 Monate. Bei extremer Wasserbelastung (z.B.: mangelnder Hygiene, hoher Fremdstoffeintrag, sehr hoher Wassertemperatur) könnte eine Nachdosierung notwendig werden.

## Patentansprüche

1. Verwendung von Polymeren quaternärer Ammoniumverbindungen bzw. deren Salze zur Desinfektion und Algenverhütung in Badewasser, **dadurch gekennzeichnet, dass** zumindest zwei Polymere von quaternären Ammoniumverbindungen bzw. deren Salze eingesetzt werden, wobei mindestens ein Polymer einen Polymerisationsgrad von 30 bis 55 und mindestens ein weiteres Polymer einen Polymerisationsgrad von 120 bis 160 aufweist.

2. Verwendung nach Anspruch 1, **dadurch gekennzeichnet, dass** zumindest zwei Polymere einer quaternären Ammoniumverbindung bzw. deren Salze eingesetzt werden, wobei mindestens ein Polymer einen Polymerisationsgrad von 35 bis 50 und mindestens ein weiteres Polymer einen Polymerisationsgrad von 130 bis 150 aufweist.

3. Verwendung nach Anspruch 1 oder 2, **dadurch gekennzeichnet, dass** die Polymere die allgemeine Formel 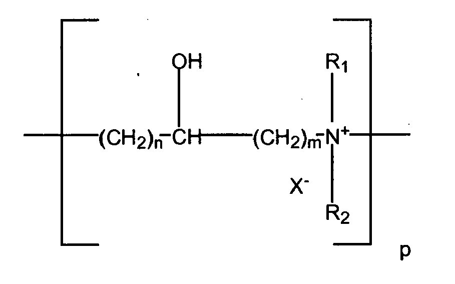 aufweisen, wobei R₁ und R₂ gleich oder verschieden sind und jeweils ausgewählt werden aus C₁-C₄-Alkylen, n und m gleich oder verschieden sind und jeweils eine ganze Zahl von 1 bis 3 bedeuten, X⁻ ein geeignetes Gegenion, vorzugsweise ein Halogenion, besonders bevorzugt Chlorid bedeutet, und p für mindestens ein Polymer 30 < p ≤ 55 und für mindestens ein weiteres Polymer 120 ≤ p ≤ 160 beträgt.

4. Verwendung nach Anspruch 3, **dadurch gekennzeichnet, dass** R₁ und R₂ gleich sind und jeweils eine Methylgruppe bedeuten, n und m gleich sind und jeweils 1 bedeuten, X- Chlorid bedeutet, und p für mindestens ein Polymer 30 ≤ p≤ 55 und für mindestens ein weiteres Polymer 120 ≤ p ≤ 160 beträgt.

5. Verwendung nach Anspruch 3 oder 4, **dadurch gekennzeichnet, dass** p für mindestens ein Polymer 35 ≤ p ≤ 50 und für mindestens ein weiteres Polymer 130 ≤ p ≤ 150 beträgt.

6. Verwendung nach einem der Ansprüche 1 bis 5, **dadurch gekennzeichnet, dass** mindestens ein Polymer ein polymeres N,N-Dimethyl-2-hydroxypropylammoniumchlorid mit einem Polymerisationsgrad von 50 und mindestens ein weiteres Polymer ein polymeres N,N-Dimethyl-2-hydroxypropylammoniumchlorid mit einem Polymerisationsgrad von 130 ist.

7. Mittel zur Desinfektion und Algenverhütung in Badewasser, **dadurch gekennzeichnet, dass** es zumindest zwei Polymere von quaternären Ammoniumverbindungn bzw. deren Salze umfasst, wobei mindestens ein Polymer einen Polymerisationsgrad von 30 bis 55 und mindestens ein weiteres Polymer einen Polymerisationsgrad von 120 bis 160 aufweist.

8. Mittel nach Anspruch 7, **dadurch gekennzeichnet, dass** es zumindest zwei Polymere einer quaternären Ammoniumverbindung bzw. deren Salze umfasst, wobei mindestens ein Polymer einen Polymerisationsgrad von 30 bis 55 und mindestens ein weiteres Polymer einen Polymerisationsgrad von 120 bis 160 aufweist.

9. Mittel nach Anspruch 7 oder 8, **dadurch gekennzeichnet, dass** die Polymere die allgemeine Formel 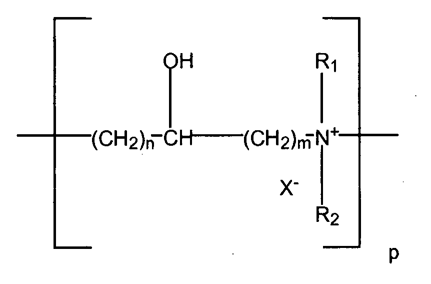 aufweisen, wobei R₁ und R₂ gleich oder verschieden sind und jeweils ausgewählt werden aus C₁-C₄-Alkylen, n und m gleich oder verschieden sind und jeweils eine ganze Zahl von 1 bis 3 bedeuten, X- ein geeignetes Gegenion, vorzugsweise ein Halogenion, besonders bevorzugt Chlorid bedeutet, und p für mindestens ein Polymer 30 ≤ p ≤ 55 und für mindestens ein weiteres Polymer 120 ≤ p ≤ 160 beträgt.

10. Mittel nach Anspruch 9, **dadurch gekennzeichnet, dass** R₁ und R₂ gleich sind und jeweils eine Methylgruppe bedeuten, n und m gleich sind und jeweils 1 bedeuten, X- Chlorid bedeutet, und p für mindestens ein Polymer 30 ≤ p ≤ 55 und für mindestens ein weiteres Polymer 120 ≤ p ≤ 160 beträgt.

11. Mittel nach Anspruch 9 oder 10, **dadurch gekennzeichnet, dass** p für mindestens ein Polymer 35 ≤ p ≤ 50 und für mindestens ein weiteres Polymer 130 ≤ p ≤ 150 beträgt.

12. Mittel nach einem der Ansprüche 7 bis 11, **dadurch gekennzeichnet, dass** es mindestens ein Polymer von N,N-Dimethyl-2-hydroxypropylammoniumchlorid mit einem Polymerisationsgrad von 50 und mindestens ein weiteres Polymer von N,N-Dimethyl-2-hydroxypropylammoniumchlorid mit einem Polymerisationsgrad von 130 umfasst.

13. Mittel nach einem der Ansprüche 7 bis 12, **dadurch gekennzeichnet, dass** es weiters Zusatzstoffe für Desinfektionsmittel zur Wasserdesinfektion und Algenverhütung umfasst, ausgewählt aus der Gruppe umfassend Flockungsmittel, Chelatbildner, Entschäumer, Farbstoffe, Duftstoffe, Hautpflegemittel und Kombinationen hievon.

## Claims

1. The use of polymers of quaternary ammonium compounds and salts thereof, respectively, for disinfection and algae prevention in bathing water, **characterized in that** at least two polymers of quaternary ammonium compounds and salts thereof, respectively, are used, wherein at least one polymer has a degree of polymerization of 30 to 55 and at least one other polymer has a degree of polymerization of 120 to 160.

2. Use according to claim 1, **characterized in that** at least two polymers of a quaternary ammonium compound and its salts, respectively, are used, wherein at least one polymer has a degree of polymerization of 35 to 50 and at least one other polymer has a degree of polymerization of 130 to 150.

3. Use according to claim 1 or 2, **characterized in that** the polymers have the general formula 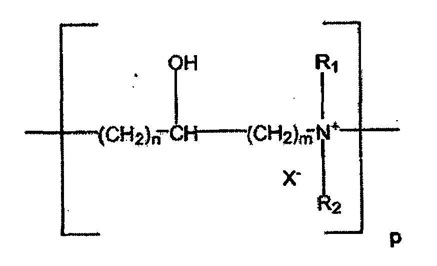 wherein R₁ and R₂ are identical or different and are each selected from C₁-C₄ alkylene, n and m are identical or different and each represents an integer of 1 to 3, X- is a suitable counterion, preferably a halogen ion, particularly preferred chloride, and p is for at least one polymer 30 ≤ p ≤ 55 and for at least one further polymer 120 ≤ p ≤ 160.

4. Use according to claim 3, **characterized in that** R₁ und R₂ are identical and each represents a methyl group, n and m are identical and each represents 1, X⁻ is chloride, and p is for at least one polymer 30 ≤ p ≤ 55 and for at least one further polymer 120 ≤ p ≤ 160.

5. Use according to claim 3 or 4, **characterized in that** p is for at least one polymer 35 ≤ p ≤ 50 and for at least one further polymer 130 ≤ p ≤ 150.

6. Use according to any one of claims 1 to 5, **characterized in that** at least one polymer is a polymeric N,N-dimethyl-2-hydroxypropylammonium chloride having a degree of polymerization of 50 and at least one further polymer is a polymeric N, N-dimethyl-2-hydroxypropylammonium chloride having a degree of polymerization of 130.

7. Medium for the disinfection and algae prevention in bathing water, **characterized in that** it comprises at least two polymers of quaternary ammonium compounds or salts thereof, respectively, wherein at least one polymer has a degree of polymerization of 30 to 55 and at least one further polymer has a degree of polymerization of 120 to 160.

8. Medium according to claim 7, **characterized in that** it comprises at least two polymers of a quaternary ammonium compound or the salts thereof, respectively, wherein at least one polymer has a degree of polymerization of 30 to 55 and at least one further polymer has a degree of polymerization of 120 to 160.

9. Medium according to claim 7 or 8, **characterized in that** the polymers have the general formula 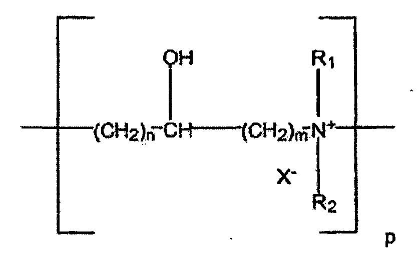 wherein R₁ and R₂ are identical or different and are each selected from C₁-C₄ alkylene, n and m are identical or different and each represents an integer of 1 to 3, X⁻ is a suitable counterion, preferably a halogen ion, particularly preferred chloride, and p is for at least one polymer 30 ≤ p ≤ 55 and for at least one further polymer 120 ≤ p ≤ 160.

10. Medium according to claim 9, **characterized in that** R₁ und R₂ are identical and each represents a methyl group, n and m are identical and each represents 1, X⁻ is chloride, and p is for at least one polymer 30 ≤ p ≤ 55 and for at least one further polymer 120 ≤ p ≤ 160.

11. Medium according to claim 9 or 10, **characterized in that** p is for at least one polymer 35 ≤ p ≤ 50 and for at least one further polymer 130 ≤ p ≤ 150.

12. Medium according to any one of claims 7 to 11, **characterized in that** it comprises at least one polymer of N,N-dimethyl-2-hydroxypropylammonium chloride having a degree of polymerization of 50 and at least one further polymer of N,N-dimethyl-2-hydroxypropylammonium chloride having a degree of polymerization of 130.

13. Medium according to any one of claims 7 to 12, **characterized in that** it further comprises additives for disinfectants for water disinfection and algae prevention, selected from the group comprising flocculants, chelating agents, defoamers, dyes, fragrances, skin care agents, and combinations thereof.

## Revendications

1. Utilisation de polymères de composés d'ammonium quaternaire ou de leurs sels pour la désinfection et la prévention contre les algues dans l'eau du bain, **caractérisée en ce qu'**on utilise au moins deux polymères de composés d'ammonium quaternaire ou leurs sels, au moins un polymère présentant un degré de polymérisation de 30 à 55 et au moins un autre polymère présentant un degré de polymérisation de 120 à 160.

2. Utilisation selon la revendication 1, **caractérisée en ce qu'**on utilise au moins deux polymères d'un composé d'ammonium quaternaire ou leurs sels, au moins un polymère présentant un degré de polymérisation de 35 à 50 et au moins un autre polymère présentant un degré de polymérisation de 130 à 150.

3. Utilisation selon la revendication 1 ou 2, **caractérisée en ce que** les polymères présentent la formule générale 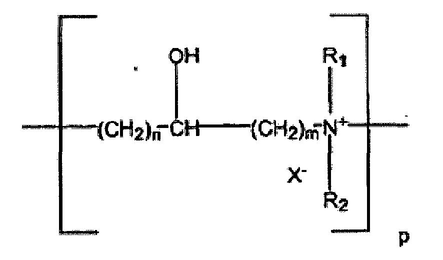 R₁ et R₂ étant identiques ou différents et à chaque fois choisis parmi les C₁-C₄-alkyles, n et m étant identiques ou différents et signifiant à chaque fois un nombre entier de 1 à 3, X⁻ signifiant un contre-ion approprié, de préférence un ion d'halogène, de manière particulièrement préférée chlorure, et p pour au moins un polymère valant 30 ≤ p ≤ 55 et pour au moins un autre polymère valant 120 ≤ p ≤ 160.

4. Utilisation selon la revendication 3, **caractérisée en ce que** R₁ et R₂ sont identiques et signifient à chaque fois un groupe méthyle, n et m sont identiques et signifient à chaque fois 1, X⁻ signifie chlorure et p pour au moins un polymère vaut 30 ≤ p ≤ 55 et pour au moins un autre polymère vaut 120 ≤ p ≤ 160.

5. Utilisation selon la revendication 3 ou 4, **caractérisée en ce que** p pour au moins un polymère vaut 35 ≤ p ≤ 50 et pour au moins un autre polymère vaut 130 ≤ p ≤ 150.

6. Utilisation selon l'une quelconque des revendications 1 à 5, **caractérisée en ce qu'**au moins un polymère est un chlorure de N,N-diméthyl-2-hydroxypropylammonium polymère présentant un degré de polymérisation de 50 et au moins un autre polymère est un chlorure de N,N-diméthyl-2-hydroxypropylammonium polymère présentant un degré de polymérisation de 130.

7. Agent pour la désinfection et la prévention contre les algues dans l'eau du bain, **caractérisé en ce qu'**il comprend au moins deux polymères de composés d'ammonium quaternaire ou leurs sels, au moins un polymère présentant un degré de polymérisation de 30 à 55 et au moins un autre polymère présentant un degré de polymérisation de 120 à 160.

8. Agent selon la revendication 7, **caractérisé en ce qu'**il comprend au moins deux polymères d'un composé d'ammonium quaternaire ou leurs sels, au moins un polymère présentant un degré de polymérisation de 30 à 55 et au moins un autre polymère présentant un degré de polymérisation de 120 à 160.

9. Agent selon la revendication 7 ou 8, **caractérisé en ce que** les polymères présentent la formule générale 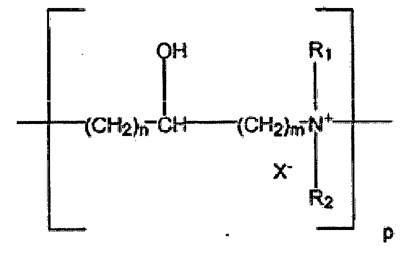 R₁ et R₂ étant identiques ou différents et à chaque fois choisis parmi les C₁-C₄-alkyles, n et m étant identiques ou différents et signifiant à chaque fois un nombre entier de 1 à 3, X⁻ signifiant un contre-ion approprié, de préférence un ion d'halogène, de manière particulièrement préférée chlorure, et p pour au moins un polymère valant 30 ≤ p ≤ 55 et pour au moins un autre polymère valant 120 ≤ p ≤ 160.

10. Agent selon la revendication 9, **caractérisé en ce que** R₁ et R₂ sont identiques et signifient à chaque fois un groupe méthyle, n et m sont identiques et signifient à chaque fois 1, X⁻ signifie chlorure et p pour au moins un polymère vaut 30 ≤ p ≤ 55 et pour au moins un autre polymère vaut 120 ≤ p ≤ 160.

11. Agent selon la revendication 9 ou 10, **caractérisé en ce que** p pour au moins un polymère vaut 35 ≤ p ≤ 50 et pour au moins un autre polymère vaut 130 ≤ p ≤ 150.

12. Agent selon l'une quelconque des revendications 7 à 11, **caractérisé en ce qu'**il comprend au moins un polymère de N,N-diméthyl-2-hydroxypropylammonium présentant un degré de polymérisation de 50 et au moins un autre polymère de N,N-diméthyl-2-hydroxypropylammonium présentant un degré de polymérisation de 130.

13. Agent selon l'une quelconque des revendications 7 à 12, **caractérisé en ce qu'**il comprend pour le reste des additifs pour des désinfectants destinés à la désinfection de l'eau et à la prévention contre les algues, choisis dans le groupe comprenant les floculants, les chélatants, les antimousses, les colorants, les parfums, les agents de soin de la peau et leurs combinaisons.
